# EUROPEAN PATENT APPLICATION

(11) **EP 4 794 080 A1**
(43) Date of publication of application: **19.08.2026**
(21) Application number: 24881155.6
(22) Date of filing: 05.08.2024
(51) Int. Cl.: H01M 50/244

(54) **CASING, BATTERY AND ELECTRIC DEVICE**

(30) Priority: 24.10.2023 CN 202322852280 U
(71) Applicant: Contemporary Amperex Technology Co., Limited, Ningde, Fujian 352100 (CN)
(72) Inventor: PAN, Yingkang, Ningde, Fujian 352100 (CN); WANG, Tianjun, Ningde, Fujian 352100 (CN)
(74) Representative: Lorenz Seidler Gossel Part. mbB
(86) International application number: PCT/CN2024/109839
(87) International publication number: WO 2025/086785

(57) **Abstract**

A casing, a battery and an electric device, which relate to the technical field of batteries. The casing comprises a casing wall (1), load-bearing members (3) and connecting members (4), wherein an accommodating cavity (2) is formed by the casing wall (1) by means of enclosure, and is provided with first connecting holes (111); the first connecting holes (111) penetrate the casing wall (1) in the direction of thickness of the casing wall (1); the load-bearing members (3) are provided in the accommodating cavity (2); the connecting members (4) extend into the accommodating cavity (2) by means of the first connecting holes (111) so as to be detachably connected to the load-bearing members (3) to fix the casing wall (1) and the load-bearing members (3); and a connecting structure is provided on the side of each connecting member (4) facing the outside of the accommodating cavity (2), and is configured to be connected to a target device.

## Description

### CROSS-REFERENCE TO RELATED APPLICATION

The present disclosure is presented based on Chinese patent application with the application number of 202322852280.6 and filing date of 24 October 2023, and claims priority to the Chinese patent application, the entire content of which is hereby incorporated into the present disclosure as reference.

### TECHNICAL FIELD

The present disclosure relates to the technical field of batteries, and in particular, to a box body, a battery, and an electrical device.

### BACKGROUND

New energy batteries are increasingly widely used in life and industry. For example, new energy vehicles equipped with batteries have been widely used. In addition, batteries have also been increasingly used in, e.g., the field of energy storage.

In the related art, a box body is generally installed on a target device in the following manner: a box wall of the box body has an opening, the box body has a guiding member corresponding to the opening, so that the guiding member can transfer a support force of the target device to a force-bearing member within the box body to support the box body by the target device.

However, the guiding member is generally welded with the opening. The welding is susceptible to, e.g., weld concavity, and the welding intensity cannot be effectively guaranteed, which easily leads to poor installation reliability of the force-bearing member, the guiding member, and the box wall, and then results in poor installation reliability of the box body on the target device.

### SUMMARY OF THE INVENTION

The present disclosure provides a box body, a battery, and an electrical device, which can improve the installation reliability of the box body on a target device.

In a first aspect, the present disclosure provides a box body, comprising a box wall, a supporting member, and a connecting element. The box wall is enclosing to form an accommodating cavity and provided with a first connecting hole, the first connecting hole runs through the box wall in a thickness direction of the box ball; the supporting member is arranged within the accommodating cavity; the connecting element extends into the accommodating cavity through the first connecting hole for detachable connection to the supporting member and fixing the box wall with the supporting member; and a connecting structure is provided on one side of the connecting element facing the outside of the accommodating cavity for connection to a target device.

In the box body provided by the present disclosure, the connecting element is detachably connected to the supporting member and the box wall through the first connecting hole to connect and fix the box wall with the supporting member. The connecting element and the first connecting hole do not need to be connected by welding, which can improve the connection reliability. Therefore, the box body provided by the present disclosure can improve the installation reliability of the box wall, the connecting element, and the supporting member, thereby improving the installation reliability of the box body on the target device.

In a possible implementation of the present disclosure, the supporting member is provided with a second connecting hole arranged corresponding to the first connecting hole along an axial direction, and the connecting element extends into the second connecting hole through one end of the second connecting hole in proximity to the first connecting hole for threaded fitting with the second connecting hole and detachable connection to the supporting member.

The connecting element is arranged for detachable connection to the supporting member by threaded fitting of the connecting element with the second connecting hole, which is beneficial to improving the convenience for installation, and is convenient for processing and manufacturing. During the installation, the first connecting hole may be first arranged for alignment with the second connecting hole, and then the connecting element may be arranged to extend into the first connecting hole from one end of the first connecting hole in proximity to the outside of the accommodating cavity, and extend into the second connecting hole through the first connecting hole, for threaded fitting with the second connecting hole.

In a possible implementation of the present disclosure, the supporting member has a first sealing portion combined with the second connecting hole to close the second connecting hole, and the connecting element extends to one side of the first sealing portion in proximity to the first connecting hole for threaded fitting with the second connecting hole.

The first sealing portion is arranged to close the second connecting hole, so that impurities entering the second connecting hole fail to easily leave from the second connecting hole through one end of the second connecting hole away from the first connecting hole, which is beneficial to improving the sealing effect of the box body.

In a possible implementation of the present disclosure, the box body further comprises a first sealing adhesive layer, through which at least one of a circumferential inner wall of the first connecting hole and a circumferential inner wall of the second connecting hole is bonded to a corresponding portion of the connecting element.

The first sealing adhesive layer is arranged, which is beneficial to preventing impurities from entering a gap between the connecting element and the first connecting hole or the second connecting hole, and is conductive to improving the sealing effect of the box body.

In a possible implementation of the present disclosure, the connecting element comprises a rod portion and a blocking portion fixedly connected to one end of the rod portion; other end of the rod portion extends into the accommodating cavity through the first connecting hole for detachable connection to the supporting member; and the blocking portion abuts against an end surface of the first connecting hole away from inside of the accommodating cavity, so that in an axial direction of the first connecting hole, the supporting member exerts a force in proximity to the first connecting hole to the box wall to fix the box wall with the supporting member.

The connecting element is arranged to be fixed to the supporting member at one end and abut against the box wall at the other end, to fix the box wall with the supporting member, which is beneficial to providing high installation reliability between the supporting member and the box wall, and is convenient for installation and processing.

In a possible implementation of the present disclosure, the blocking portion is a flange formed by the rod portion extending outward along a radial direction, and the blocking portion abuts against the end surface of the first connecting hole away from the inside of the accommodating cavity along the axial direction.

The flange is used as the blocking portion, which is beneficial to improving the reliability of abutment of the blocking portion against the end surface of the first connecting hole away from the inside of the accommodating cavity, and is convenient for processing and manufacturing of the blocking portion.

In a possible implementation of the present disclosure, the blocking portion has a longer circumferential outline than the first connecting hole.

The blocking portion is arranged to have a longer circumferential outline than the first connecting hole, which is beneficial to improving the abutment reliability, and is also beneficial for the blocking portion to have a better sealing effect on the first connecting hole.

In a possible implementation of the present disclosure, the box body further comprises a second sealing adhesive layer, through which a surface where the blocking portion abuts against the box wall is bonded to a corresponding portion of the box wall.

The second sealing adhesive layer is provided, which is beneficial to improving the sealing effect of the blocking portion on the first connecting hole.

In a possible implementation of the present disclosure, an outer surface of the accommodating cavity is recessed inward towards a direction in proximity to the inside of accommodating cavity to form a mounting groove, the first connecting hole is arranged on a bottom wall of the mounting groove; and the blocking portion fits with the mounting groove to abut against the bottom wall of the mounting groove and to abut against the end surface of the first connecting hole away from the inside of the accommodating cavity.

The blocking portion is arranged to fit with the mounting groove, which is beneficial to improving the sealing effect of the blocking portion on the first connecting hole, is also conductive to improving the flatness of the outer side surface of the box body, and is convenient for the installation between the box body and the target device.

In a possible implementation of the present disclosure, along a depth direction of the mounting groove, an end surface of the mounting groove away from one end of the bottom wall of the mounting groove is a first plane, an end surface of the blocking portion away from one end of the bottom wall of the mounting groove is a second plane, and the second plane is located within the mounting groove and is coplanar with the first plane.

The first plane is arranged to be coplanar with the second plane, which is beneficial to improving the flatness of the outer side surface of the box body, and is convenient for the installation between the box body and the target device.

In a possible implementation of the present disclosure, along the axial direction of the first connecting hole, a sealing member is supported between the supporting member and an end surface of the first connecting hole in proximity to the inside of the accommodating cavity, and the sealing member extends along a circumferential direction of the first connecting hole.

The sealing member is arranged, which is beneficial to improving the sealing effect between the supporting member and the box wall.

In a possible implementation of the present disclosure, along the axial direction of the first connecting hole, a first sealing groove is formed on an end surface of the supporting member in proximity to one end of the first connecting hole, and the sealing member comprises a first sealing member arranged within the first sealing groove; and/or, a second sealing groove is formed on the end surface of the first connecting hole in proximity to the inside of the accommodating cavity, and the sealing member comprises a second sealing member arranged within the second sealing groove.

The sealing member is arranged within the sealing groove, which is beneficial to improving the installation stability of the sealing member, thereby improving the sealing effect.

In a possible implementation of the present disclosure, the connecting structure is a mounting hole arranged on the connecting element, the mounting hole is arranged corresponding to the first connecting hole along the axial direction, and one end of the mounting hole away from the inside of the accommodating cavity is used for the target device to extend into, so that the mounting hole is connected to the target device.

The box body is installed on the target device through the mounting hole arranged corresponding to the first connecting hole, which is beneficial to providing high installation reliability of the box body on the target device.

In a possible implementation of the present disclosure, at least a portion of the mounting hole is located within the first connecting hole, and the connecting element has a second sealing portion combined with the mounting hole to close one end of the mounting hole away from the outside of the accommodating cavity.

The second sealing portion is arranged to close the mounting hole, which is beneficial to improving the sealing effect of the box body.

In a possible implementation of the present disclosure, the supporting member has a support portion higher than a lower side wall of the accommodating cavity in a vertical direction, and an upper side surface of the support portion is used to support a battery module, to provide a gap between the battery module and the lower side wall of the accommodating cavity in the vertical direction.

The supporting member is arranged to support the battery module, so that the supporting member is fully utilized, which is beneficial to improving the structural compactness of the battery.

In a possible implementation of the present disclosure, the first connecting hole is arranged on the lower side wall of the accommodating cavity.

The first connecting hole is arranged on the lower side wall of the accommodating cavity, so that the first connecting hole is closely spaced from the supporting member, which is beneficial to improving the structural compactness of the battery.

In a possible implementation of the present disclosure, the supporting member extends along a first direction, with an angle between the first direction and the axial direction of the first connecting hole; at least two of the first connecting holes and at least two of the connecting elements are arranged with one-to-one correspondence, and the at least two connecting elements are connected to a given one of the supporting member and are arranged at intervals along the first direction.

Each of the at least two connecting elements is arranged to be connected to the given supporting member, which is beneficial to improving the installation reliability of the supporting member and the box wall, thereby improving the installation reliability of the box body on the target device. The supporting member extends along the first direction, so that the supporting member has a beam-shaped structure, which is conducive to improving the convenience for processing and manufacturing of the supporting member at low costs.

In a possible implementation of the present disclosure, the number of supporting members is at least two, the at least two supporting members are arranged at intervals along a second direction, with an angle between the second direction and the axial direction of the first connecting hole and an angle between the second direction and the first direction, and each of the supporting members is connected to at least two of the connecting elements.

A plurality of supporting members are arranged, which can improve the installation reliability of the box body on the target device.

In a possible implementation of the present disclosure, the outer surface of the accommodating cavity protrudes along the axial direction of the first connecting hole to form a mounting platform, and the first connecting hole runs through the mounting platform to communicate with the accommodating cavity.

Along the axial direction of the first connecting hole, a surface of an end wall of the box wall where the first connecting hole is formed away from the inside of the accommodating cavity is divided into two regions. One region is a portion protruding along the axial direction of the first connecting hole, that is, a surface of the mounting platform away from the inside of the accommodating cavity, and the other region is a non-protruding portion referred to as a second region below. The outer surface of the accommodating cavity forms the mounting platform, which is beneficial to reducing the area of the second region, is conductive to ensuring the flatness of the second region, and is convenient for processing and manufacturing of the second region.

In a possible implementation of the present disclosure, the mounting platform presents a strip structure, a length direction and a width direction of the mounting platform are each perpendicular to the axial direction of the first connecting hole, the number of mounting platforms is at least two, the at least two mounting platforms are arranged along the width direction, and each of the mounting platforms is correspondingly provided with the first connecting hole.

The at least two mounting platforms divide the outer surface of the accommodating cavity into a plurality of regions, which can greatly reduce the area of the second region, and is conductive to ensuring the flatness of the second region.

In a second aspect, the present disclosure provides a battery, comprising a battery cell and the box body provided in the first aspect of the present disclosure. The number of battery cells is at least two. The at least two battery cells are electrically connected and are both arranged within the box body.

The battery provided by the present disclosure comprises the box body provided in the first aspect of the present disclosure, and can achieve same effect, that is, can improve the installation reliability of the box body on the target device.

In a third aspect, the present disclosure provides an electrical device, comprising an electrical body and a battery provided in the second aspect of the present disclosure. The battery is configured to power the electrical body.

The electrical device provided by the present disclosure comprises the battery provided in the second aspect of the present disclosure, and can achieve same effect, that is, can improve the installation reliability of the box body on the target device.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals. In the figures:
FIG. 1 is a first exploded schematic diagram of a battery pack in some embodiments of the present disclosure;
FIG. 2 is a schematic structural diagram of a supporting member installed within an accommodating cavity in some embodiments of the present disclosure;
FIG. 3 is a second exploded schematic diagram of a battery pack in some embodiments of the present disclosure;
FIG. 4 is a schematic structural diagram of a battery pack from a first perspective in some embodiments of the present disclosure;
FIG. 5 is a sectional view at A-A in FIG. 4;
FIG. 6 is a partial enlarged view at B in FIG. 5; and
FIG. 7 is an exploded schematic diagram of a box body in some embodiments of the present disclosure.

Description of reference numerals in the figures:
1-Box wall; 11-Body; 111-First connecting hole; 112-Mounting groove; 1121-Bottom wall of mounting groove; 1122-Side wall of mounting groove; 113-First plane; 114-Second surface; 115-Mounting platform; 12-Box cover; 2-Accommodating cavity; 3-Supporting member; 31-Second connecting hole; 32-First sealing portion; 33-First sealing groove; 34-First surface; 4-Connecting element; 41-Mounting hole; 42-Rod portion; 43-blocking portion; 431-Second plane; 432-Abutment surface; 44-Second sealing portion; 5-Sealing member; 6-Steel wire thread sleeve; 7-Battery module; 8-Hook-shaped structure; a-Axial direction of first connecting hole; b-First direction; c-Second direction; d-First length; e-Second length; f-First region.

### DETAILED DESCRIPTION

Embodiments of the technical solutions of the present disclosure will be described in detail below in conjunction with the drawings. The following embodiments are only used to more clearly illustrate the technical solutions of the present disclosure, are therefore only used as examples, and cannot be used to limit the scope of protection of the present disclosure.

Unless otherwise defined, all technical and scientific terms used herein have same meanings as those commonly understood by those skilled in the art to which the present disclosure pertains to. The terms used herein are for the purpose of describing specific embodiments only and are not intended to limit the present disclosure. The terms "including" and "having" and any variations thereof in the present disclosure are intended to cover non-exclusive inclusion.

In the description of the embodiments of the present disclosure, the technical terms "first," "second," "third," and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is simply a description of an association of associated objects, which indicates that there may exist three relationships, for example, A and/or B may represent three situations: A exists alone, both A and B exist, and B exists alone. In addition, the character "/" herein generally means that the associated objects before and after it are in an "or" relationship.

In the description of the embodiments of the present disclosure, unless otherwise explicitly specified and defined, the technical terms such as "mount," "connect," "connection," and "fix" should be understood in a broad sense. For example, the connection may be a fixed connection, a detachable connection, or an integrated connection, may be a mechanical connection or an electrical connection, or may be a direct connection, an indirect connection through an intermediate, an internal communication between two elements, or an interaction relationship between two elements. For those of ordinary skills in the art, the specific meanings of the above terms in the embodiments of the present disclosure may be understood based on specific situations.

In the description of the embodiments of the present disclosure, unless otherwise explicitly stated and defined, the technical term "abut" should be understood in a broad sense, and may be direct contact, or contact through an intermediate medium layer, or contact substantially without an interaction force between two in contact, or contact with an interaction force between two in contact.

The present disclosure will be described in detail below.

In the related art, a box body is generally installed on a target device in the following manner: a box wall of the box body has an opening, the box body has a guiding member corresponding to the opening, so that the guiding member can transfer a support force of the target device to a force-bearing member within the box body to support the box body by the target device.

However, the guiding member is generally welded with the opening. The applicants of the present disclosure found that the welding is susceptible to, e.g., weld concavity, and the welding intensity cannot be effectively guaranteed, which easily leads to poor installation reliability of the force-bearing member, the guiding member, and the box wall, and then results in poor installation reliability of the box body on the target device.

The present disclosure provides a box body, comprising a box wall, a supporting member, and a connecting element. The box wall is enclosing to form an accommodating cavity and provided with a first connecting hole, the first connecting hole runs through the box wall in a thickness direction of the box ball; the supporting member is arranged within the accommodating cavity; the connecting element extends into the accommodating cavity through the first connecting hole for detachable connection to the supporting member and fixing the box wall with the supporting member; and a connecting structure is provided on one side of the connecting element facing the outside of the accommodating cavity for connection to a target device. In the box body provided by the present disclosure, the connecting element is detachably connected to the supporting member and the box wall through the first connecting hole to connect and fix the box wall with the supporting member. The connecting element and the first connecting hole do not need to be connected by welding, which can improve the connection reliability. Therefore, the box body provided by the present disclosure can improve the installation reliability of the box wall, the connecting element, and the supporting member, thereby improving the installation reliability of the box body on the target device.

The box body in an embodiment of the present disclosure may be used as, e.g., a box body of a battery pack or a box body of a battery module. When the box body can serve as a box body of a battery pack, the accommodating cavity can accommodate a plurality of battery modules, and the plurality of battery modules are electrically connected. Of course, in some embodiments of the present disclosure, the battery pack may also be a module-less battery pack, which does not comprise a battery module, and the battery cell is directly accommodated in the accommodating cavity.

In an embodiment of the present disclosure, the battery cell may be a secondary battery. The secondary battery refers to a battery cell that, after being discharged, can activate an active material by charging for continued use.

The battery cell may be, e.g., a lithium-ion battery, a sodium-ion battery, a sodium/lithium-ion battery, a lithium metal battery, a sodium metal battery, a lithium-sulfur battery, a magnesium-ion battery, a nickel-metal hydride battery, a nickel-cadmium battery, or a lead storage battery, which is not limited in the embodiments of the present disclosure.

An embodiment of the present disclosure provides a battery, comprising a battery cell and a box body. The number of battery cells is at least two. The at least two battery cells are electrically connected and are both arranged within the box body.

In some embodiments, the at least two battery cells are electrically connected, and the electrical connection between the at least two battery cells may be series connection, parallel connection, or parallel-series connection through a bus component.

In some embodiments, the battery may be a battery module or a battery pack.

An embodiment of the present disclosure further provides an energy storage battery apparatus, comprising a plurality of battery packs, wherein the plurality of battery packs are electrically connected.

The present disclosure provides an electrical device, comprising an electrical body and a battery, wherein the battery is configured to power the electrical body. In an embodiment of the present disclosure, the electrical device may refer to, e.g., a vehicle, a ship, or an aircraft. The vehicle may be of various types, for example, may be a sedan, an off-road vehicle, a sport utility vehicle (SUV), a passenger car, a truck, a pickup truck, a motor home, or the like.

Description is provided below with reference to the drawings.

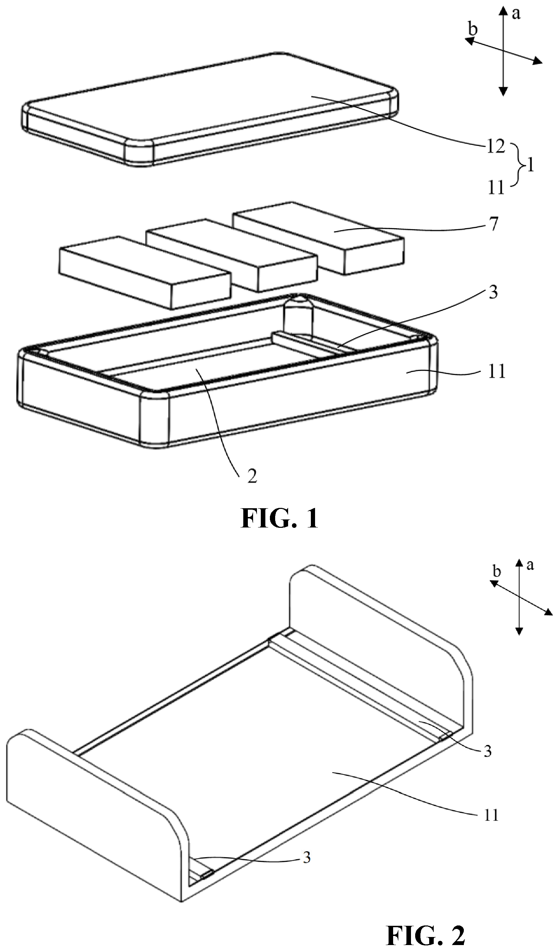

Referring to FIG. 1, FIG. 1 is a first exploded schematic diagram of a battery pack in some embodiments of the present disclosure. An embodiment of the present disclosure provides a battery pack, comprising a battery module 7 and a box body. The number of battery modules 7 is at least two. The at least two battery modules 7 are electrically connected and are both arranged within the box body.

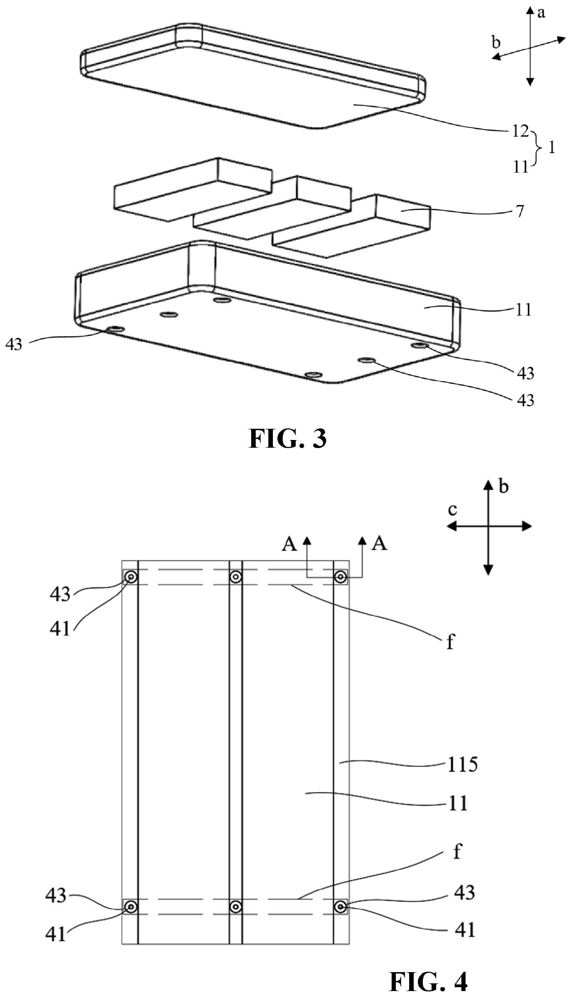

Referring to FIGS. 2, 3, and 4, FIG. 2 is a schematic structural diagram of a supporting member installed within an accommodating cavity in some embodiments of the present disclosure; FIG. 3 is a second exploded schematic diagram of a battery pack in some embodiments of the present disclosure; and FIG. 4 is a schematic structural diagram of a battery pack from a first perspective in some embodiments of the present disclosure. A box body in an embodiment of the present disclosure comprises a box wall 1, a supporting member 3, and a connecting element 4. The box wall 1 is enclosing to form an accommodating cavity 2, and provided with a first connecting hole 111, the first connecting hole 111 runs through the box wall 1 in a thickness direction of the box ball 1; the supporting member 3 is arranged within the accommodating cavity 2; the connecting element 4 extends into the accommodating cavity 2 through the first connecting hole 111 for detachable connection to the supporting member 3 and fixing the box wall 1 with the supporting member 3; and a connecting structure is provided on one side of the connecting element 4 facing the outside of the accommodating cavity 2 for connection to a target device.

In an embodiment of the present disclosure, the first connecting hole 111 is a through hole, and an axial direction a of the first connecting hole is different from an extension direction of the box wall 1, so as to run through the box wall 1 in the thickness direction of the box wall 1.

The supporting member 3 in an embodiment of the present disclosure can withstand gravity of the box body and gravity of a component such as a battery cell within the accommodating cavity 2. The above gravity can be transferred to the connecting element 4 through the supporting member 3, and the connecting element 4 is connected to the target device through the connecting structure, so that the above gravity can be transferred to the target device through the connecting element 4. A region surrounded by the dotted line in FIG. 4, that is, a first region f, is a region of the box wall 1 corresponding to the supporting member 3 in the axial direction a of the first connecting hole. In some embodiments of the present disclosure, the electrical device is a vehicle, and the target device may be, e.g., a vehicle body or a vehicle frame.

In an embodiment of the present disclosure, the one side of the connecting element 4 facing the outside of the accommodating cavity 2 refers to the one side of the connecting element 4 facing the outside of the accommodating cavity 2 through the first connecting hole 111, that is, one side of the connecting structure exposed to the outside of the accommodating cavity 2 through the first connecting hole 111.

In an embodiment of the present disclosure, the connecting element 4 and the box wall 1 are split structures, and are arranged to run through the first connecting through hole, to extend into the accommodating cavity 2 through the first connecting hole 111.

In an embodiment of the present disclosure, the detachable connection between the connecting element 4 and the supporting member 3 may be implemented in various forms, for example, snap fit, threaded connection, or the like.

The connecting element 4 is detachably connected to the supporting member 3 and the box wall 1 through the first connecting hole 111 to connect and fix the box wall 1 with the supporting member 3. The connecting element 4 and the first connecting hole 111 do not need to be connected by welding, which can improve the connection reliability. Therefore, the box body provided by the present disclosure can improve the installation reliability of the box wall 1, the connecting element 4, and the supporting member 3, thereby improving the installation reliability of the box body on the target device.

Moreover, the connecting element 4 is detachably connected to the supporting member 3 and the box wall 1 through the first connecting hole 111, which is more convenient for assembly at lower costs than welding.

In some embodiments of the present disclosure, referring to FIGS. 2, 3, and 4, the box body comprises a body 11 and a box cover 12, the body 11 comprises a barrel body and a wall body that are integrated, the wall body is combined with one end of the barrel body, to close one end of the barrel body, and the box cover 12 is detachably combined with the other end of the barrel body to form the accommodating cavity 2 by enclosure together with the barrel body and the wall body. The first connecting hole 111 is formed on the wall body, and runs through the wall body in an axial direction of the barrel body, that is, runs through the wall body in a thickness direction of the wall body, to communicate with internal space of the barrel body.

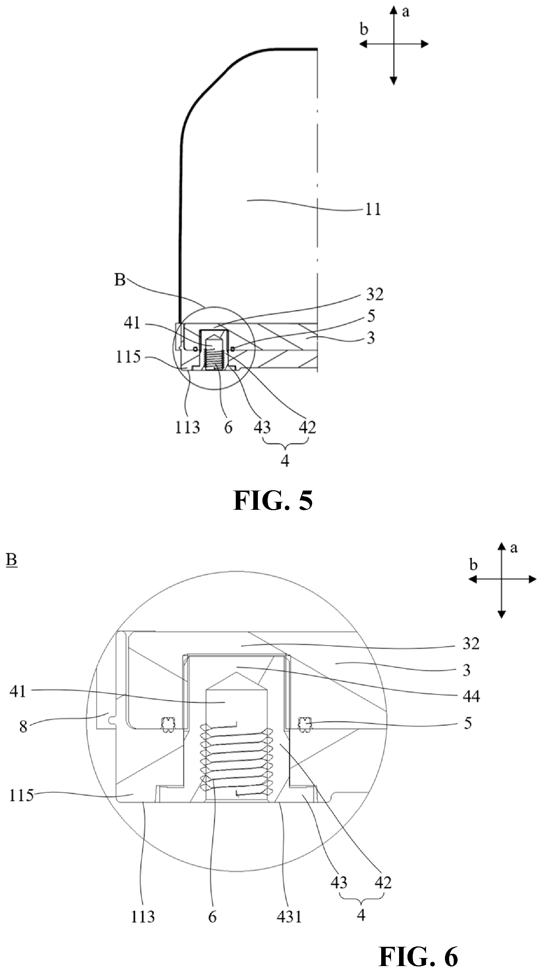

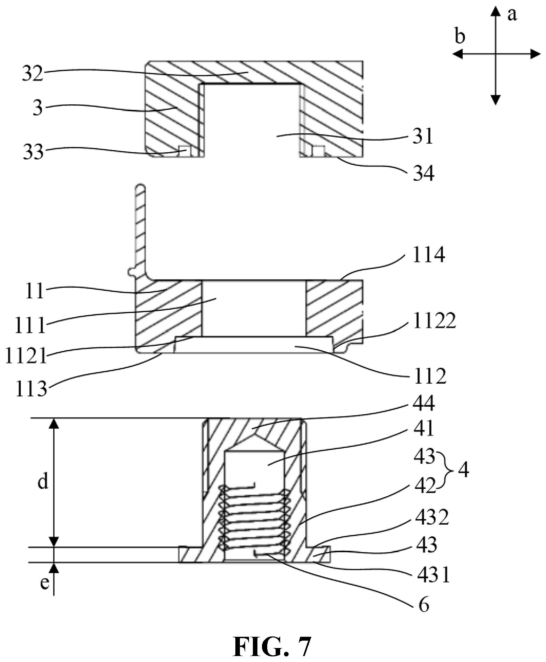

In some embodiments of the present disclosure, referring to FIGS. 5, 6, and 7, FIG. 5 is a sectional view at A-A in FIG. 4; FIG. 6 is a partial enlarged view at B in FIG. 5; and FIG. 7 is an exploded schematic diagram of a box body in some embodiments of the present disclosure. The supporting member 3 is provided with a second connecting hole 31, the second connecting hole 31 is arranged corresponding to the first connecting hole 111 along an axial direction, and the connecting element 4 extends into the second connecting hole 31 through one end of the second connecting hole 31 in proximity to the first connecting hole 111 for threaded fitting with the second connecting hole 31 and detachable connection to the supporting member 3.

In an embodiment of the present disclosure, the second connecting hole 31 and the first connecting hole 111 are arranged correspondingly along the axial direction, that is, the axial direction a of the first connecting hole is identical or approximately identical to an axial direction of the second connecting hole 31.

In an embodiment of the present disclosure, the connecting element 4 is threadedly fitted with the second connecting hole 31, that is, the connecting element 4 has an external thread, and the second connecting hole 31 has an internal thread. An axial direction of the external thread and an axial direction of the internal thread are each identical to the axial direction of the second connecting hole 31, and the external thread is threadedly fitted with the internal thread.

The connecting element 4 is detachably connected to the supporting member 3 by threaded fitting of the connecting element 4 with the second connecting hole 31, which is beneficial to improving the convenience for installation, and is convenient for processing and manufacturing. During the installation, the first connecting hole 111 can be first aligned with the second connecting hole 31, and then the connecting element 4 can extend into the first connecting hole 111 from one end of the first connecting hole 111 in proximity to the outside of the accommodating cavity 2, and extend into the second connecting hole 31 through the first connecting hole 111, for threaded fitting with the second connecting hole 31.

Of course, in some embodiments of the present disclosure, referring to FIGS. 5, 6, and 7, the connecting element 4 can also be threadedly fitted with the first connecting hole 111, so that the connecting element 4 fixedly connects the supporting member 3 to the box wall 1.

In some embodiments of the present disclosure, referring to FIGS. 5, 6, and 7, the supporting member 3 has a first sealing portion 32, the first sealing portion 32 is combined with the second connecting hole 31 to close the second connecting hole 31, and the connecting element 4 extends to one side of the first sealing portion 32 in proximity to the first connecting hole 111 for threaded fitting with the second connecting hole 31.

The first sealing portion 32 in an embodiment of the present disclosure closes the second connecting hole 31, so that the second connecting hole 31 is a blind hole facing the first connecting hole 111.

The connecting element 4 in an embodiment of the present disclosure extends to the one side of the first sealing portion 32 in proximity to the first connecting hole 111, that is, the connecting element 4 extends from the one end of the second connecting hole 31 in proximity to the first connecting hole 111 into the second connecting hole 31, and continues to extend along the axial direction of the second connecting hole 31 to the other end of the second connecting hole 31, but does not run through the first sealing portion 32 in the axial direction of the second connecting hole 31.

The first sealing portion 32 is arranged to close the second connecting hole 31, so that impurities entering the second connecting hole 31 fail to easily leave from the second connecting hole 31 through one end of the second connecting hole 31 away from the first connecting hole 111, which is beneficial to improving the sealing effect of the box body.

In some embodiments of the present disclosure, referring to FIGS. 5, 6, and 7, the first sealing portion 32 may be integrally formed with an inner wall of the second connecting hole 31, which is beneficial to improving the convenience for processing and manufacturing, and is conducive to achieving better sealing effect.

Of course, in some embodiments of the present disclosure, referring to FIGS. 5, 6, and 7, the second connecting hole 31 may also be a through hole. During the installation of the connecting element 4, the first connecting hole 111 may be first aligned with the second connecting hole 31, and then the connecting element 4 may extend from the one end of the second connecting hole 31 away from the first connecting hole 111 into the second connecting hole 31, and extend into the first connecting hole 111 through the second connecting hole 31, to threadedly fit with the first connecting hole 111 and fix the supporting member 3 to the box wall 1.

In some embodiments of the present disclosure, referring to FIGS. 5, 6, and 7, the box body further comprises a first sealing adhesive layer, through which at least one of a circumferential inner wall of the first connecting hole 111 and a circumferential inner wall of the second connecting hole 31 is bonded to a corresponding portion of the connecting element 4.

In an embodiment of the present disclosure, the circumferential inner wall of the first connecting hole 111 is bonded to the corresponding portion of the connecting element 4. The corresponding portion refers to a portion of the connecting element 4 opposite to the circumferential inner wall of the first connecting hole 111 in a radial direction of the first connecting hole 111. Similarly, the circumferential inner wall of the second connecting hole 31 is bonded to the corresponding portion of the connecting element 4. The corresponding portion refers to a portion of the connecting element 4 opposite to the circumferential inner wall of the second connecting hole 31 in a radial direction of the second connecting hole 31.

The first sealing adhesive layer is arranged, which is beneficial to improving the sealing effect of the box body.

In some embodiments of the present disclosure, referring to FIGS. 5, 6, and 7, the second connecting hole 31 threadedly fits with the connecting element 4, the circumferential inner wall of the second connecting hole 31 is bonded to the corresponding portion of the connecting element 4, and the first sealing adhesive layer may comprise a threaded adhesive layer.

In some embodiments of the present disclosure, referring to FIGS. 5, 6, and 7, the circumferential inner wall of the first connecting hole 111 is bonded to the corresponding portion of the connecting element 4, and the first sealing adhesive layer may comprise a structural adhesive layer.

In some embodiments of the present disclosure, referring to FIGS. 5, 6, and 7, the supporting member 3 is welded to the box wall 1. In this way, the supporting member 3 is connected to the box wall 1 with high reliability. The connecting element 4 may be first arranged to run through the first connecting hole 111 and the second connecting hole 31 to fix the supporting member 3 to the box wall 1, to accurately position a relative position between the supporting member 3 and the box wall 1, and then weld the supporting member 3 to the box wall 1, with convenient processing and high accuracy.

In some embodiments of the present disclosure, referring to FIGS. 5, 6, and 7, the connecting element 4 comprises a rod portion 42 and a blocking portion 43 fixedly connected to one end of the rod portion 42; other end of the rod portion 42 extends into the accommodating cavity 2 through the first connecting hole 111 for detachable connection to the supporting member 3; and the blocking portion 43 abuts against an end surface of the first connecting hole 111 away from inside of the accommodating cavity 2, so that in an axial direction a of the first connecting hole, the supporting member 3 exerts a force in proximity to the first connecting hole 111 to the box wall 1 to fix the box wall 1 with the supporting member 3.

In an embodiment of the present disclosure, one end and the other end of the rod portion 42 respectively refer to the two ends of the rod portion 42 in its own axial direction. It is understandable that the axial direction of the rod portion 42 is identical or approximately identical to the axial direction a of the first connecting hole.

In an embodiment of the present disclosure, the end surface of the first connecting hole 111 away from the inside of the accommodating cavity 2 is the end surface of the first connecting hole 111 in proximity to the outside of the accommodating cavity 2 along its own axial direction; and the end surface of the first connecting hole 111 in proximity to the inside of the accommodating cavity 2 is the end surface of the first connecting hole 111 in proximity to the inside of the accommodating cavity 2 along its own axial direction.

In an embodiment of the present disclosure, the blocking portion 43 abuts against the end surface of the first connecting hole 111 away from the inside of the accommodating cavity 2, and the blocking portion 43 exerts an abutting force in proximity to the inside of the accommodating cavity 2 to the end surface of the first connecting hole 111 away from the inside of the accommodating cavity 2. The abutting force is in a direction parallel or approximately parallel to the axial direction a of the first connecting hole, points from one side of the second connecting hole 31 away from in proximity to the accommodating cavity 2 to one side of the second connection hole in proximity to the inside of the accommodating cavity 2, and will be transferred to the supporting member 3 through the box wall 1, that is, in the axial direction a of the first connecting hole, the supporting member 3 exerts a force in proximity to the first connecting hole 111 to the box wall 1.

The connecting element 4 is arranged to be fixed to the supporting member 3 at one end and abut against the box wall 1 at the other end, to fix the box wall 1 with the supporting member 3, which is beneficial to providing high installation reliability between the supporting member 3 and the box wall 1, and is convenient for installation and processing.

In some embodiments of the present disclosure, referring to FIGS. 5, 6, and 7, the blocking portion 43 is a flange formed by the rod portion 42 extending outward along a radial direction, and the blocking portion 43 abuts against the end surface of the first connecting hole 111 away from the inside of the accommodating cavity 2 along the axial direction.

In an embodiment of the present disclosure, the blocking portion 43 abuts against the end surface of the first connecting hole 111 away from the inside of the accommodating cavity 2 along the axial direction, and the surface against which the blocking portion 43 abuts, with reference to an abutment surface 432 in the figure, is the end surface of one end of the blocking portion 43 along the axial direction of the rod portion 42.

The flange is used as the blocking portion 43, which is beneficial to improving the reliability of abutment of the blocking portion 43 against the end surface of the first connecting hole 111 away from the inside of the accommodating cavity 2, and is convenient for processing, manufacturing, and installation.

In some embodiments of the present disclosure, referring to FIGS. 5, 6, and 7, a portion of the rod portion 42 located on the abutment surface 432 in proximity to the inside of the accommodating cavity 2 is a first portion. Along the axial direction of the rod portion 42, a length ratio of the blocking portion 43 to the first portion is 1:7-11, as an example, may be 1:7, 1:8, 1:9, 1:10, etc.

In an embodiment of the present disclosure, first length d in the figure may be referred to for length of the first portion along the axial direction of the rod portion 42, and second length e may be referred to for length of the blocking portion 43 along the axial direction of the rod portion 42. Both the first length d and the second length e can be measured using a vernier caliper.

The length ratio of the blocking portion 43 to the first portion is arranged to be 1:7-11, which is beneficial to providing high rigidity and intensity of the connecting element 4 with less material wastage, and is conductive to improving the installation stability of the connecting element 4.

In some embodiments of the present disclosure, referring to FIGS. 5, 6, and 7, the length of the blocking portion 43 along the axial direction of the rod portion 42 is 2.5-3 mm, as an example, may be 2.5 mm, 2.8 mm, or 3 mm, which is beneficial to improving the installation stability of the connecting element 4.

In some embodiments of the present disclosure, referring to FIGS. 5, 6, and 7, the blocking portion 43 has a longer circumferential outline than the first connecting hole 111.

In an embodiment of the present disclosure, the blocking portion 43 has a longer circumferential outline than the first connecting hole 111, which means that in the axial direction a of the first connecting hole, the blocking portion 43 blocks an opening at one end of the first connecting hole 111 in proximity to the outside of the accommodating cavity 2.

The blocking portion 43 is arranged to have a longer circumferential outline than the first connecting hole 111, which is beneficial to improving the abutment reliability, and is also beneficial for the blocking portion 43 to have a better sealing effect on the first connecting hole 111.

In some embodiments of the present disclosure, referring to FIGS. 5, 6, and 7, the box body further comprises a second sealing adhesive layer, through which a surface where the blocking portion 43 abuts against the box wall 1 is bonded to a corresponding portion of the box wall 1.

In an embodiment of the present disclosure, the surface where the blocking portion 43 abuts against the box wall 1 is bonded to the corresponding portion of the box wall 1. The corresponding portion of the box wall 1 refers to a portion of the box wall 1 abutting against the abutment surface 432.

The second sealing adhesive layer is arranged, which is beneficial to improving the sealing effect of the blocking portion 43 on the first connecting hole 111.

In some embodiments of the present disclosure, referring to FIGS. 5, 6, and 7, a glue groove is formed on at least one of the portion of the box wall 1 corresponding to the abutment surface 432 and the abutment surface 432. The glue groove may be filled with a structural glue to form the second sealing adhesive layer, which is beneficial to improving the sealing effect of the blocking portion 43 on the first connecting hole 111.

In some embodiments of the present disclosure, referring to FIGS. 5, 6, and 7, an outer surface of the accommodating cavity 2 is recessed inward towards a direction in proximity to the inside of accommodating cavity 2 to form a mounting groove 112, the first connecting hole 111 is arranged on a bottom wall 1121 of the mounting groove; and the blocking portion 43 fits with the mounting groove 112 to abut against the bottom wall 1121 of the mounting groove and to abut against the end surface of the first connecting hole 111 away from the inside of the accommodating cavity 2.

In an embodiment of the present disclosure, the first connecting hole 111 runs through the bottom wall 1121 of the mounting groove 112 in a depth direction, so that the first connecting hole 111 communicates the inside with the outside of the accommodating cavity 2, and the connecting element 4 runs through the bottom wall 1121 of the mounting groove through the first connecting hole 111 for connection to the supporting member 3.

In an embodiment of the present disclosure, both the bottom wall 1121 and the side wall of the mounting groove have meanings as commonly understood by those skilled in the art of the embodiment of the present disclosure. The side wall 1122 of the mounting groove refers to a wall surface extending along the depth direction of the mounting groove 112, and the mounting groove 112 refers to an end wall of one end of the mounting groove 112 in the depth direction.

The blocking portion 43 is arranged to fit with the mounting groove 112, which is beneficial to improving the sealing effect of the blocking portion 43 on the first connecting hole 111, is also conductive to improving the flatness of the outer side surface of the box body, and is convenient for the installation between the box body and the target device.

In some embodiments of the present disclosure, referring to FIGS. 5, 6, and 7, along the depth direction of the mounting groove 112, an end surface of the mounting groove 112 away from one end of the bottom wall 1121 of the mounting groove is a first plane 113, an end surface of the blocking portion 43 away from one end of the bottom wall 1121 of the mounting groove is a second plane 431, and the second plane 431 is located within the mounting groove 112 and is coplanar with the first plane 113.

The first plane 113 is arranged to be coplanar with the second plane 431, which is beneficial to improving the flatness of the outer side surface of the box body, and is convenient for the installation between the box body and the target device.

In some embodiments of the present disclosure, referring to FIGS. 5, 6, and 7, along the axial direction a of the first connecting hole, a sealing member 5 is supported between the supporting member 3 and an end surface of the first connecting hole 111 in proximity to the inside of the accommodating cavity 2, and the sealing member 5 extends along a circumferential direction of the first connecting hole 111.

In an embodiment of the present disclosure, an end surface of the supporting member 3 in proximity to the first connecting hole 111 refers to a first surface 34 in the figure, and the end surface of the first connecting hole 111 in proximity to the inside of the accommodating cavity 2 refers to a second surface 114. Along the axial direction a of the first connecting hole, the first surface 34 and the second surface 114 are oppositely arranged. Along the axial direction a of the first connecting hole, the sealing member 5 is located between the first surface 34 and the second surface 114, is supported between the first surface 34 and the second surface 114, and exerts such a force to the first surface 34 and the second surface 114 that the first surface 34 and the second surface 114 move away from each other in the axial direction a of the first connecting hole.

The sealing member 5 is arranged, which is beneficial to improving the sealing effect between the supporting member 3 and the box wall 1.

In some embodiments of the present disclosure, referring to FIGS. 5, 6, and 7, the sealing member 5 extends along the circumferential direction of the first connecting hole 111 to form a closed annular shape, which is beneficial to improving the sealing effect between the supporting member 3 and the box wall 1.

In some embodiments of the present disclosure, referring to FIGS. 5, 6, and 7, the sealing member 5 may be a sealing rubber ring. The sealing rubber ring is arranged to serve as the sealing ring, which is low-cost with a better sealing effect.

In some embodiments of the present disclosure, referring to FIGS. 5, 6, and 7, along the axial direction a of the first connecting hole, a first sealing groove 33 is formed on an end surface of the supporting member 3 in proximity to one end of the first connecting hole 111, and the sealing member 5 comprises a first sealing member arranged within the first sealing groove 33; and/or, a second sealing groove is formed on the end surface of the first connecting hole 111 in proximity to the inside of the accommodating cavity 2, and the sealing member 5 comprises a second sealing member arranged within the second sealing groove.

In an embodiment of the present disclosure, the first surface 34 is recessed inward in a direction away from the second surface 114 to form the first sealing groove 33, and the first sealing member is supported between the bottom wall of the first sealing groove 33 and the second surface 114. The second surface 114 is recessed inward in a direction away from the first surface 34 to form the second sealing groove, and the second sealing member is supported between the bottom wall of the second sealing groove and the first surface 34.

In an embodiment of the present disclosure, the first sealing member and the second sealing member may also refer to a given sealing member, that is, along the axial direction a of the first connecting hole, one end of the sealing member 5 is located within the first sealing groove 33, and the other end is located within the second sealing groove. The bottom wall of the first sealing groove 33 and the bottom wall of the second sealing groove are oppositely arranged along the axial direction a of the first connecting hole, and the sealing member 5 is supported between the bottom wall of the first sealing groove 33 and the bottom wall of the second sealing groove along the axial direction a of the first connecting hole.

The sealing member 5 is arranged within the sealing groove, which is beneficial to improving the installation stability of the sealing member 5, thereby improving the sealing effect.

In some embodiments of the present disclosure, referring to FIGS. 5, 6, and 7, the connecting structure is a mounting hole 41 arranged on the connecting element 4, the mounting hole 41 is arranged corresponding to the first connecting hole 111 along the axial direction, and one end of the mounting hole 41 away from the inside of the accommodating cavity 2 is used for the target device to extend into, so that the mounting hole 41 is connected to the target device.

In an embodiment of the present disclosure, the mounting hole 41 is arranged corresponding to the first connecting hole 111 in the axial direction, that is, the axial direction of the mounting hole 41 is approximately identical or identical to the axial direction a of the first connecting hole. The mounting hole 41 is formed on a portion of the connecting element 4 facing the outside of the accommodating cavity 2, that is, formed on the portion of the connecting element 4 exposed to the outside of the accommodating cavity 2 through the first connecting hole 111.

The box body is installed on the target device through the mounting hole 41 arranged corresponding to the first connecting hole 111, which is beneficial to providing high installation reliability of the box body on the target device.

In some embodiments of the present disclosure, referring to FIGS. 5, 6, and 7, the target device comprises a target device body and a locking accessory, wherein the locking accessory is arranged to run through the target device body and the mounting hole 41, to fix the box body to the target device body.

In some embodiments of the present disclosure, referring to FIGS. 5, 6, and 7, the locking accessory threadedly fits with the mounting hole 41, which is beneficial to improving the installation reliability of the box body on an external device.

In some embodiments of the present disclosure, referring to FIGS. 5, 6, and 7, a steel wire thread sleeve 6 is provided within the mounting hole 41, which is beneficial to improving the installation reliability of the box body on the external device.

In some embodiments of the present disclosure, referring to FIGS. 5, 6, and 7, at least a portion of the mounting hole 41 is located within the first connecting hole 111, the connecting element 4 has a second sealing portion 44, and the second sealing portion 44 is combined with the mounting hole 41 to close one end of the mounting hole 41 away from the outside of the accommodating cavity 2.

In an embodiment of the present disclosure, the second sealing portion 44 closes the mounting hole 41, so that the mounting hole 41 presents a blind hole structure facing the outside of the accommodating cavity 2. The mounting hole 41 faces the outside of the accommodating cavity 2, that is, the mounting hole 41 is exposed to the outside of the accommodating cavity 2 through the first connecting hole 111.

In an embodiment of the present disclosure, the locking accessory extends to one side of the second sealing portion 44 away from the inside of the accommodating cavity 2, that is, the locking accessory extends from one end of the mounting hole 41 away from the accommodating cavity 2 into the mounting hole 41 along the axial direction of the mounting hole 41, and continues to extend to the other end of the mounting hole 41 along the axial direction of the mounting hole 41, but does not run through the second sealing portion 44 in the axial direction of the mounting hole 41.

The second sealing portion 44 is arranged to close the mounting hole 41, which is beneficial to improving the sealing effect of the box body.

In some embodiments of the present disclosure, referring to FIGS. 5, 6, and 7, the second sealing portion 44 may be integrally formed with an inner wall of the mounting hole 41. which is beneficial to improving the convenience for processing and manufacturing, and is conducive to achieving better sealing effect.

In some embodiments of the present disclosure, referring to FIGS. 5, 6, and 7, the supporting member 3 has a support portion higher than a lower side wall of the accommodating cavity 2 in a vertical direction, and an upper side surface of the support portion can support a battery module 7, to provide a gap between the battery module 7 and the lower side wall of the accommodating cavity 2 in the vertical direction.

In an embodiment of the present disclosure, the lower side wall of the accommodating cavity 2 is a lower end wall of the accommodating cavity 2.

The supporting member 3 is arranged to support the battery module 7, so that the supporting member 3 is fully utilized, which is beneficial to improving the structural compactness of the battery.

In some embodiments of the present disclosure, referring to FIGS. 4, 6, and 7, on the basis that the supporting member 3 supports the battery module 7, the first connecting hole 111 is arranged on the lower side wall of the accommodating cavity 2.

In an embodiment of the present disclosure, the supporting member 3 supports the battery module 7, and the supporting member 3 needs to be fixed on the lower side wall of the accommodating cavity 2.

In an embodiment of the present disclosure, the first connecting hole 111 is arranged on the lower side wall of the accommodating cavity 2, and the first connecting hole 111 runs through the lower side wall of the accommodating cavity 2 in the vertical direction.

The first connecting hole 111 is arranged on the lower side wall of the accommodating cavity 2, so that the first connecting hole 111 is closely spaced from the supporting member 3, which is beneficial to improving the structural compactness of the battery.

In some embodiments of the present disclosure, referring to FIGS. 4, 6, and 7, the first connecting hole 111 extends along the vertical direction, which is convenient for processing and manufacturing, facilitates disassembly and assembly of the connecting element 4, and contributes to connection between the connecting structure and the target device.

In some embodiments of the present disclosure, referring to FIGS. 4, 6, and 7, the first connecting hole 111 may also be arranged on, e.g., an upper side wall of the accommodating cavity 2 or a side wall of the accommodating cavity 2 extending along the vertical direction.

In some embodiments of the present disclosure, referring to FIGS. 4, 6, and 7, the supporting member 3 extends along a first direction b, with an angle between the first direction b and the axial direction of the first connecting hole; at least two of the first connecting holes 111 and at least two of the connecting elements 4 are arranged with one-to-one correspondence, and the at least two connecting elements 4 are connected to a given one of the supporting member 3 and are arranged at intervals along the first direction b.

Each of the at least two connecting elements 4 is arranged to be connected to the given supporting member 3, which is beneficial to improving the installation reliability of the supporting member 3 and the box wall 1, thereby improving the installation reliability of the box body on the target device. The supporting member 3 extends along the first direction b, so that the supporting member 3 has a beam-shaped structure, which is conducive to improving the convenience for processing and manufacturing of the supporting member 3 at low costs.

In some embodiments of the present disclosure, referring to FIGS. 4, 6, and 7, the at least two first connecting holes corresponding to the given supporting member 3 have the same axial direction a. Such a structural form is conducive to improving stress condition of the supporting member 3, thereby providing stable installation of the supporting member 3 and the box wall 1, and also facilitating the installation among the connecting element 4, the supporting member 3, and the box wall 1.

In some embodiments of the present disclosure, referring to FIGS. 4, 6, and 7, the first direction b is perpendicular to the axial direction a of the first connecting hole, which is beneficial to improving the installation convenience and stability.

In some embodiments of the present disclosure, referring to FIGS. 4, 6, and 7, the number of connecting elements 4 corresponding to the given supporting member 3 is three, which, on the one hand, enables the supporting member 3 to better satisfy the requirements for installation rigidity and strength, and on the other hand, is beneficial to reducing costs.

In some embodiments of the present disclosure, referring to FIGS. 4, 6, and 7, the first direction b is perpendicular to the vertical direction, and the first connecting hole 111 is arranged on the lower side wall of the accommodating cavity 2. The box body further comprises a hook-shaped structure 8, and each of the supporting members 3 is fixedly connected to the hook-shaped structure 8 along the first direction b. The hook-shaped structure 8 faces downward to be hung on the box wall 1, so that the supporting member 3 is installed on the box wall 1, which is beneficial to improving the installation reliability of the supporting member 3 and the box wall 1.

In some embodiments of the present disclosure, referring to FIGS. 4, 6, and 7, the number of supporting members 3 is at least two, the at least two supporting members 3 are arranged at intervals along a second direction c, with an angle between the second direction c and the axial direction a of the first connecting hole and an angle between the second direction and the first direction b, and each of the supporting members 3 is connected to at least two of the connecting elements 4.

A plurality of supporting members 3 are arranged, which can improve the installation reliability of the box body on the target device.

In some embodiments of the present disclosure, referring to FIGS. 4, 6, and 7, the first direction b and the axial direction a of the first connecting hole are each perpendicular to the second direction c, which is beneficial to improving the installation convenience and stability.

In some embodiments of the present disclosure, referring to FIGS. 4, 6, and 7, the number of supporting members 3 is two, and the two supporting members 3 are arranged at both ends of the box wall 1 in the second direction c respectively, which, on the one hand, enables the supporting member 3 to better satisfy the requirements for load bearing, and on the other hand, is beneficial to reducing costs.

In some embodiments of the present disclosure, referring to FIGS. 4, 6, and 7, one of the connecting elements 4 corresponding to one of the supporting members 3 is referred to as a first connecting element 4, and one of the connecting elements 4 corresponding to another supporting member 3 is referred to as a second connecting element 4. Along the second direction c, at least two first connecting elements 4 and at least two second connecting elements 4 are arranged with one-to-one correspondence, which is beneficial to improving the installation convenience and stability.

In some embodiments of the present disclosure, referring to FIGS. 4, 6, and 7, the first connecting elements 4 and the second connecting elements 4 corresponding to each other are flush in the first direction b, which is beneficial to improving the installation convenience and stability.

In some embodiments of the present disclosure, referring to FIGS. 4, 6, and 7, the outer surface of the accommodating cavity 2 protrudes along the axial direction a of the first connecting hole to form a mounting platform 115, and the first connecting hole 111 runs through the mounting platform 115 to communicate with the accommodating cavity 2. In this way, along the axial direction a of the first connecting hole, a surface of an end wall of the box wall 1 where the first connecting hole 111 is formed away from the inside of the accommodating cavity 2 is divided into two regions. One region is a portion protruding along the axial direction a of the first connecting hole, that is, a surface of the mounting platform 115 away from the inside of the accommodating cavity 2, and the other region is a non-protruding portion referred to as a second region below. The outer surface of the accommodating cavity 2 forms the mounting platform 115, which is beneficial to reducing the area of the second region, is conductive to ensuring the flatness of the second region, and is convenient for processing and manufacturing of the second region.

In some embodiments of the present disclosure, referring to FIGS. 4, 6, and 7, the mounting platform 115 presents a strip structure, a length direction and a width direction of the mounting platform 115 are each perpendicular to the axial direction a of the first connecting hole, the number of mounting platforms 115 is at least two, the at least two mounting platforms 115 are arranged along the width direction, and each of the mounting platforms 115 is correspondingly provided with the first connecting hole 111. In this way, the at least two mounting platforms 115 divide the outer surface of the accommodating cavity 2 into a plurality of regions, which can greatly reduce the area of the second region, and is conductive to ensuring the flatness of the second region.

In an embodiment of the present disclosure, the length direction and the width direction of the mounting platform 115 are perpendicular to each other.

In some embodiments of the present disclosure, referring to FIGS. 4, 6, and 7, the length direction of the mounting platform 115 is perpendicular to the first direction b, which is beneficial to improving the strength and rigidity of the box body.

In some embodiments of the present disclosure, referring to FIGS. 4, 6, and 7, the mounting platform 115 runs through the box wall 1 in the length direction, which is beneficial to improving the strength and rigidity of the box body.

In some embodiments of the present disclosure, referring to FIGS. 4, 6, and 7, along the axial direction a of the corresponding first connecting hole, an end surface of the mounting platform 115 away from one end of the inside of the accommodating cavity 2 is recessed inward towards a direction in proximity to the inside of the accommodating cavity 2, to form the mounting groove 112, which is convenient for processing and manufacturing of the mounting groove 112, and can improve the fitting reliability of the connecting element 4 with the mounting groove 112.

In some embodiments of the present disclosure, referring to FIGS. 4, 6, and 7, the number of first connecting holes 111 running through a given mounting platform 115 to communicate with the accommodating cavity 2 is at least two, and the at least two first connecting holes 111 are respectively provided with the first connecting element 4 and the second connecting element 4. In this way, the first connecting element 4 and the second connecting element 4 may be installed on the given mounting platform 115, which is convenient for processing and manufacturing, and is beneficial to improving the installation strength and rigidity.

In some embodiments of the present disclosure, referring to FIGS. 4, 6, and 7, the first connecting hole 111 is arranged on the lower side wall of the accommodating cavity 2, and its axial direction is the vertical direction. The supporting member 3 extends along the first direction b, and the first direction b is perpendicular to the vertical direction. The number of supporting members 3 is two. The two supporting members 3 are respectively located at both ends of the accommodating cavity 2 along the second direction c. The second direction c is perpendicular to the vertical direction and perpendicular to the first direction b. The supporting member 3 has a support portion higher than the lower side wall of the accommodating cavity 2 in the vertical direction, and the upper side surface of the support portion is used to support the battery module 7, to provide a gap between the battery module 7 and the lower side wall of the accommodating cavity 2 in the vertical direction. Three second connecting holes 31 are provided on a lower side surface of each supporting member 3. The three second connecting holes 31 are arranged along the first direction b. Among the three second connecting holes 31, two second connecting holes 31 are located at both ends of the accommodating cavity 2 in the first direction b, and the other second connecting hole 31 is located in a center portion of the accommodating cavity 2 in the first direction b. The second connecting hole 31 is a blind hole. The box wall 1 is provided with a first connecting hole 111 corresponding to each second connecting hole 31, and the first connecting hole 111 is coaxial with the corresponding second connecting hole 31.

The connecting element 4 comprises a rod portion 42 and a flange formed by the rod portion 42 extending outward along a radial direction, the flange is fixedly connected to one end of the rod portion 42; the other end of the rod portion 42 extends into the accommodating cavity 2 through the first connecting hole 111, and extends into the second connecting hole 31 through one end of the second connecting hole 31 in proximity to the first connecting hole 111, to threadedly fit with the second connecting hole 31, and the circumferential inner wall of the first connecting hole 111 and the circumferential inner wall of the second connecting hole 31 are each bonded to the corresponding portion of the rod portion 42. The flange abuts along the axial direction against the end surface of the first connecting hole 111 away from the inside of the accommodating cavity 2, so that in the axial direction a of the first connecting hole, the supporting member 3 exerts a force in proximity to the first connecting hole 111 to the box wall 1 to fix the box wall 1 with the supporting member 3. The flange has a longer circumferential outline than the first connecting hole 111. A surface where the flange abuts against the box wall 1 is bonded to the corresponding portion of the box wall 1. Along the axial direction a of the first connecting hole, the first sealing groove 33 is formed on the end surface of the supporting member 3 in proximity to one end of the first connecting hole 111. The sealing member 5 is arranged within the first sealing groove 33, and supported between the supporting member 3 and the end surface of the first connecting hole 111 in proximity to the inside of the accommodating cavity 2. The sealing member 5 extends along the circumferential direction of the first connecting hole 111.

The connecting structure is a mounting hole 41 arranged on the connecting element 4, the mounting hole 41 is arranged corresponding to the first connecting hole 111 along the axial direction, and the one end of the mounting hole 41 away from the outside of the accommodating cavity 2 does not run through the connecting element 4. The steel wire thread sleeve 6 is provided within the mounting hole 41, and the one end of the mounting hole 41 away from the inside of the accommodating cavity 2 is used for the target device to extend into, so that the mounting hole 41 is connected to the target device.

During assembly, the sealing member 5 may be first installed within the first sealing groove 33, and the wire thread sleeve 6 may be installed within the mounting hole 41. After the first connecting hole 111 is aligned with the second connecting hole 31, the connecting element 4 extends into the second connecting hole 31 through the first connecting hole 111, to threadedly fit with the second connecting hole 31, and the flange abuts against the end surface of the first connecting hole 111 away from the inside of the accommodating cavity 2, thus fixing the box wall 1 to the supporting element 3.

The above embodiments are merely used to illustrate the technical solutions of the present disclosure, instead of imposing any limitation on the present disclosure; while the present disclosure is described in detail with reference to the above embodiments, those with ordinary skills in the art should understand that: they can still make modifications on the technical solutions disclosed in the above embodiments, or perform equivalent replacements on a part or all of technical features thereof; and these modifications or replacements are not intended to depart the essence of corresponding technical solutions from the scope of the technical solutions of the embodiments of the present disclosure, but should all be encompassed within the scope of the present disclosure. In particular, the technical features mentioned in the various embodiments may be combined in any manner as long as there is no structural conflict.

## Claims

1. A box body, comprising:
a box wall enclosing to form an accommodating cavity and provided with a first connecting hole, the first connecting hole running through the box wall in a thickness direction of the box ball;
a supporting member arranged within the accommodating cavity; and
a connecting element extending into the accommodating cavity through the first connecting hole for detachable connection to the supporting member and fixing the box wall with the supporting member; a connecting structure being provided on one side of the connecting element facing the outside of the accommodating cavity for connection to a target device.

2. The box body according to claim 1, wherein the supporting member is provided with a second connecting hole arranged corresponding to the first connecting hole along an axial direction, and the connecting element extends into the second connecting hole through one end of the second connecting hole in proximity to the first connecting hole for threaded fitting with the second connecting hole and detachable connection to the supporting member.

3. The box body according to claim 2, wherein the supporting member has a first sealing portion combined with the second connecting hole to close the second connecting hole, and the connecting element extends to one side of the first sealing portion in proximity to the first connecting hole for threaded fitting with the second connecting hole.

4. The box body according to claim 2 or 3, wherein the box body further comprises a first sealing adhesive layer, through which at least one of a circumferential inner wall of the first connecting hole and a circumferential inner wall of the second connecting hole is bonded to a corresponding portion of the connecting element.

5. The box body according to any one of claims 1 to 4, wherein the connecting element comprises a rod portion and a blocking portion fixedly connected to one end of the rod portion; other end of the rod portion extends into the accommodating cavity through the first connecting hole for detachable connection to the supporting member; and the blocking portion abuts against an end surface of the first connecting hole away from inside of the accommodating cavity, so that in an axial direction of the first connecting hole, the supporting member exerts a force in proximity to the first connecting hole to the box wall to fix the box wall with the supporting member.

6. The box body according to claim 5, wherein the blocking portion is a flange formed by the rod portion extending outward along a radial direction, and the blocking portion abuts against the end surface of the first connecting hole away from the inside of the accommodating cavity along the axial direction.

7. The box body according to claim 6, wherein the blocking portion has a longer circumferential outline than the first connecting hole.

8. The box body according to claim 7, wherein the box body further comprises a second sealing adhesive layer, through which a surface where the blocking portion abuts against the box wall is bonded to a corresponding portion of the box wall.

9. The box body according to any one of claims 5 to 8, wherein an outer surface of the accommodating cavity is recessed inward towards a direction in proximity to the inside of accommodating cavity to form a mounting groove, the first connecting hole is arranged on a bottom wall of the mounting groove; and the blocking portion fits with the mounting groove to abut against the bottom wall of the mounting groove and to abut against the end surface of the first connecting hole away from the inside of the accommodating cavity.

10. The box body according to claim 9, wherein along a depth direction of the mounting groove, an end surface of the mounting groove away from one end of the bottom wall of the mounting groove is a first plane, an end surface of the blocking portion away from one end of the bottom wall of the mounting groove is a second plane, and the second plane is located within the mounting groove and is coplanar with the first plane.

11. The box body according to any one of claims 1 to 10, wherein along the axial direction of the first connecting hole, a sealing member is supported between the supporting member and an end surface of the first connecting hole in proximity to the inside of the accommodating cavity, and the sealing member extends along a circumferential direction of the first connecting hole.

12. The box body according to claim 11, wherein along the axial direction of the first connecting hole, a first sealing groove is formed on an end surface of the supporting member in proximity to one end of the first connecting hole, and the sealing member comprises a first sealing member arranged within the first sealing groove; and/or, a second sealing groove is formed on the end surface of the first connecting hole in proximity to the inside of the accommodating cavity, and the sealing member comprises a second sealing member arranged within the second sealing groove.

13. The box body according to any one of claims 1 to 12, wherein the connecting structure is a mounting hole arranged on the connecting element, the mounting hole is arranged corresponding to the first connecting hole along the axial direction, and one end of the mounting hole away from the inside of the accommodating cavity is used for the target device to extend into, so that the mounting hole is connected to the target device.

14. The box body according to claim 13, wherein at least a portion of the mounting hole is located within the first connecting hole, and the connecting element has a second sealing portion combined with the mounting hole to close one end of the mounting hole away from the outside of the accommodating cavity.

15. The box body according to any one of claims 1 to 12, wherein the supporting member has a support portion higher than a lower side wall of the accommodating cavity in a vertical direction, and an upper side surface of the support portion is used to support a battery module, to provide a gap between the battery module and the lower side wall of the accommodating cavity in the vertical direction.

16. The box body according to claim 15, wherein the first connecting hole is arranged on the lower side wall of the accommodating cavity.

17. The box body according to any one of claims 1 to 12, wherein the supporting member extends along a first direction, with an angle between the first direction and the axial direction of the first connecting hole; at least two of the first connecting holes and at least two of the connecting elements are arranged with one-to-one correspondence, and the at least two connecting elements are connected to a given one of the supporting member and are arranged at intervals along the first direction.

18. The box body according to claim 17, wherein a number of the supporting members is at least two, the at least two supporting members are arranged at intervals along a second direction, with an angle between the second direction and the axial direction of the first connecting hole and an angle between the second direction and the first direction, and each of the supporting members is connected to at least two of the connecting elements.

19. The box body according to any one of claims 1 to 12, wherein the outer surface of the accommodating cavity protrudes along the axial direction of the first connecting hole to form a mounting platform, and the first connecting hole runs through the mounting platform to communicate with the accommodating cavity.

20. The box body according to claim 19, wherein the mounting platform presents a strip structure, a length direction and a width direction of the mounting platform are each perpendicular to the axial direction of the first connecting hole, the number of the mounting platforms is at least two, the at least two mounting platforms are arranged along the width direction, and each of the mounting platforms is correspondingly provided with the first connecting hole.

21. A battery, comprising:
the box body according to any one of claims 1 to 20; and
at least two electrically connected battery cells arranged within the box body.

22. An electrical device, comprising:
an electrical body; and
the battery according to claim 21 configured to power the electrical body.
